Europäisches Patentamt

(19) European Patent Office

Office européen des brevets

(11) Publication number: **0 204 670**
**B1**

(12) **EUROPEAN PATENT SPECIFICATION**

(45) Date of publication of the patent specification:
26.07.89

(21) Application number: **86830149.0**

(22) Date of filing: **30.05.86**

(51) Int. Cl.⁴: **B 60 P 3/025,** E 04 H 15/06,
B 60 P 3/34

(54) Variable attitude awning in particular for pedlar's vehicles.

(30) Priority: **03.06.85 IT 942885**

(43) Date of publication of application:
**10.12.86 Bulletin 86/50**

(45) Publication of the grant of the patent:
**26.07.89 Bulletin 89/30**

(84) Designated Contracting States:
**AT BE CH DE FR GB LI LU NL SE**

(56) References cited:
**EP-A- 0 011 041**
**FR-A- 2 329 498**
**FR-A- 2 419 045**
**FR-A- 2 519 303**
**US-A- 3 730 196**

(73) Proprietor: **F.LLI PENNA S.N.C. DI PENNA ANTONINO E
GIOVANNI, 100, Via Vittorio Alfieri, I-50013 Campi
Bisenzio (FI) (IT)**

(72) Inventor: **Penna, Antonio, Via Enrico Fermi, 78,
I-50013 Campi Bisenzio (Florence) (IT)**

(74) Representative: **Bardini, Marco Luigi et al, c/o Società
Italiana Brevetti S.p.A. Corso dei Tintori 25,
I-50122 Firenze (IT)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

**Description**

The present invention relates to a collapsible awning suitable for fixed and mobile installations and particularly for vehicles of pedlars and so on as specified in the preamble of claim 1. Such an awning is known from US-A-3 730 196.

Various awning of the type specified above are known. In one of the known types the flexible sheet material to be extended is opened by a plurality of partially overlapping fans. Material overlap, in correspondance of the overlap of the fans, is seldom perfect, this resulting in considerable drawbacks mainly in case of rain, where water seepage takes place, or in case of wind, where the overlapping portions increase the awning instability. Besides the poor reliability of this kind of awning, a further disadvantage consists in that the operations necessary for their mounting and dismounting are rather complicate and laborious. From the US-A-3 730 196 there is known a canopy structure formed by a single sheet material supported by pivotable arms both storable in a box fixed to the vehicle roof.

The structure according to the cited patent is easy to handle and compact when stored, but it is considered of poor reliability when a large sheltered area has to be provided along one or more sides of the pedlar's vehicle. Moreover, it is not possible a suitable positioning of said structure according to the various wind, rain and sun conditions that a pedlar may encounter. Finally, it is generally undesirable that the box and the arm support of the above structure be fixed to the vehicle body directly, as disclosed in the cited patent.

It is therefore the main purpose of the present invention to provide an awning for the above mentioned use whose inclination, in its open condition, can be varied as necessary and whose overall dimensions, in its closed conditions, are as small as possible.

A further purpose of the present invention is to provide an awning as mentioned above, which is able to be differently positioned, in its closed condition, with respect to the vehicle on which is mounted, so as to be placed in an optimum position from the point of view both of the ride conditions of the vehicle and its sheltering conditions particularly where problems of space limitation are involved.

Another purpose of the present invention is to provide an awning as mentioned above characterized by high reliability as well as easy and quick handling during the opening and closing operations.

These purposes are achieved by providing an awning for the above cited uses which comprises a containing box, supported by a frame fixed on the roof of the vehicle, and pivotally mounted with respect to the longitudinal axis of the vehicle. The box embodies means for holding pivotable arms for supporting a flexible sheet material suitable of being stored in said box with said arms. Operating means are provided for angularly displacing the box about an axis parallel to said longitudinal axis so that the awning inclination can be varied as necessary. Preferably, said means for holding the material support arms comprises a pair of support groups placed at the ends of the box and pivotally mounted on respective, fixed vertical axes. The supports pivotally hold the arms which can be angularly displaced on their common plane. Alternatively, said means for holding the material support arms can be made slidable along a suitable guide formed in the box.

In particular, the means for operating the box is constituted by fluid actuators which allow the box to be angularly displaced from a rest or non use, position substantially central with respect to the vehicle roof to an eccentric operating position, or from an eccentric operating position to a rest position externally rotated with respect to the support frame. In the latter case, preferably, the box is mounted on a carriage transversely sliding with respect to said frame.

Further characteristics, as well as the advantages, of the collapsible awning according to the invention will be more clearly understood from the following, exemplifying and not limiting description of a preferred embodiment made with reference to the attached drawings, in which:

Fig. 1 shows the awning according to the invention mounted on a vehicle and in its open condition;

Fig. 2 is a schematic side view of one of the supports for the material support arms;

Fig. 3 is a front view of the support of figure 2;

Fig. 4 is top plan view of the support of figure 2;

Fig. 5 is a front view of the box;

Fig. 6 is a further front view of the box according to an alternative embodiment;

Fig. 7 is a perspective detail view of a further alternative embodiment of the invention.

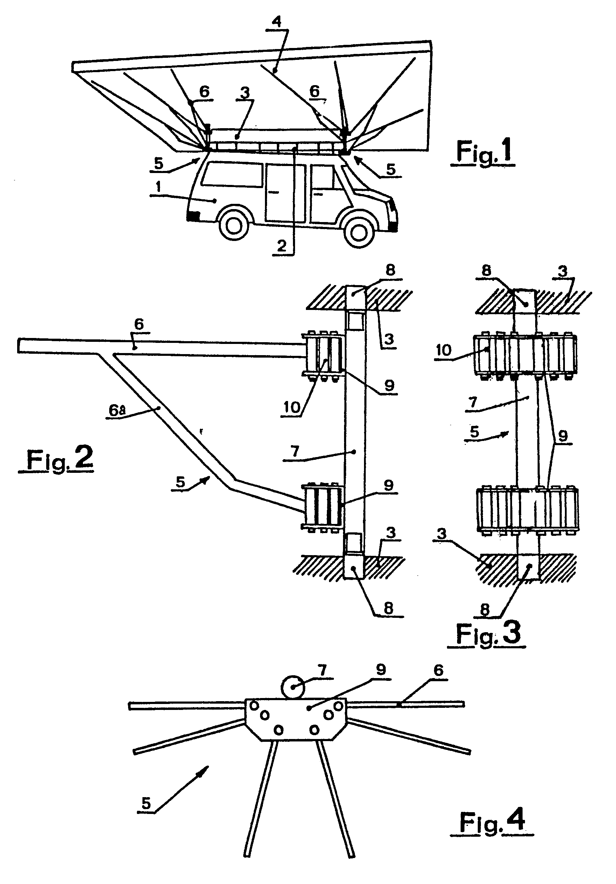

With reference to figure 1, it has been indicated at 1 a van-type vehicle on the roof of which a fixed frame 2 is mounted supporting a box 3 holding an awning 4, shown in open condition in figure 1, extending laterally from the vehicle 1. At the ends, fore and back, of the box 3 two support groups, generally indicated at 5, are mounted. Each group 5 holds a plurality of overhanging material support arms 6.

A support group 5 of the arms 6 is shown in figures 2, 3 and 4.

With reference to said figures, each group 5 comprises an axle 7, pivotally connected to the box 3 by bearings 8, in particular thrust bearings, and carrying, close to its lower and upper ends, a pair of support members 9. The support members 9, which are arranged in an alignment relation over one another and rigidly fixed to axle 7, for example by welding, each is formed by two parallel, spaced apart plates that extend radially. Pivots 10 are pivotally mounted between the plates of each support member 9 and are substantially aligned along the free edges of the plates. Each pivot 10 of the upper support member 9 is rigidly connected to the end of a respective arm 6, while the corresponding pivots 10 of the lower support member 9 are connected to the end of a respective stiffening strut 6a for the arm 6. It is apparent from the above that the arms 6 can be rotated around their respective pivots 10 indipendently from one another and can be further integrally rotated with respect to the frame 2 or to the box 3, by rotating their common axle 7. The rotation of the arms 6 around pivots 10 makes it possible the awning be spread out as needed and according the vehicle dimensions in an easy and suitable way, while the rotation around axle 7 makes it possible, in an extremely simple way, the collecting of arms 6 within the box 3 and their drawing out therefrom when the awning has to be opened. The awning opening can be advantageously carried out by means of tie rods, for instance ropes, connected to the outermost arms fixed to the awning. By providing a suitable traction on said tie rods it is possible to draw the arms 6 out from the box 3 and open them to the set position, securing then the free end of said tie rods to a fixed point to lock the awning in its open position. The innermost arms are free and can be oriented so as to better hold the central position of the awning and to avoid formation of depressions thereon. Since the arm length necessary to achieve this result would be considerable and would require a cumbersome box as far as its length is concerned, the innermost arms are preferably of the telescopic type or formed of hinged parts and similar types.

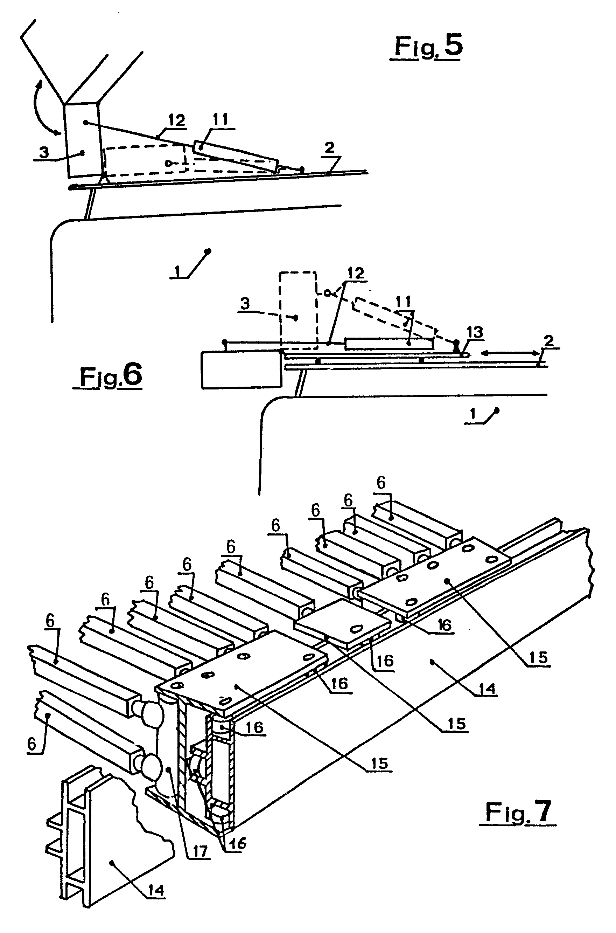

In order to vary the inclination of the awning, in its open condition and to properly position the box 3 with respect to the fixed frame 2 mounted on the vehicle roof, when the awning is housed therein, operating means is provided that are schematically shown in figure 5. Said operating means essentially comprises a pair of hydraulic cylinders 11 (only one shown in figure 5) installed at the fore and back sides of the fixed frame 2 and hinged to it at one of their ends. Piston rods 12 extending from the cylinders 11 are hinged to box 3. Cylinders 11 can be equipped with a separate power source or be connected to the vehicle power system to this purpose and their control panel can be installed in the vehicle cab. Hydraulic cylinders 11 allow the box 3 to be displaced from a rest position, substantially central on the vehicle roof, wherein it lyes on the frame 2 with one side (as shown with discontinuous line in figure 5), to an operating position, eccentrical on the vehicle roof, wherein it lyes on the frame 2 with the side adjacent to the previous one. The axis of rotation of the box 3 coincides in this case with the corner common to both sides, said corner being hinged to the fixed frame 2. When the box 3 is in its operating position, as shown with continuous line in figure 5, the awning is horizontal. However, by appropriately operating cylinders 11, it is possible to slope the awning upward and downward. According to a different embodiment of the inventions shown in figure 6, the box 3 and relevant operating means are mounted on a carriage 13 transversely sliding on the frame 2. Such a solution can be used in any case to appropriately positioning the box 3 on the vehicle roof, when the latter is running, but it is particularly suitable when the box 3 is requested to be hinged along or in correspondance of the longitudinal side of the fixed frame 2. This solution, as shown in figure 6, is particularly advantageous, because it allows the box 3 to be rotated on one side of the frame 2 and outwardly with respect to it,thereby allowing a reduction of the height of the assembly. Therefore it is possible to shelter the vehicle, equipped with the box 3, in a garage or under a shed of limited height.

In this case it is preferred that the box 3 be mounted on carriage 13, because otherwise its rest position would result too eccentric with respect to the vehicle, thus giving raise to an uneven load distribution on it, which might be dangerous during the ride. The carriage 13 can be realized in any known way. For example, it can be formed by a slide, on which the box 3 is hinged, sliding on a cross rack fixed on the frame 2. The slide movement can be manual or motor actuated and in any case the slide can be locked in the required position.

According to another embodiment of the invention the groups holding the material support arms 6 are slidably mounted within the box 3. To this purpose a grooved beam 14 is provided in the box 3, in which carriages 15 slide by means of rollers 16 carrying the material support arms 6. Some of the arms 6 are stationary, others are articulated about pivots 17, between arms 6 extensible and articulated, stiffening rods (not shown) being provided. In this way the awning can be spread to the required extent according to the free arrangement and displacement of carriages 15, as well as stiffened and tightened by means of arms 6 and the relevant stiffening rods connecting them to one another. Advantageously at the back end of the beam 14 there can be provided a beam portion angularly displaceable with respect to the beam axis, so that some of the material support arms can be oriented in a transverse direction and can be grouped in any required position.

It is clear that the operating means for positioning the box 3 and, consequently, the awning inclination, as described above, can be substituted for mechanical devices, such as lever means manually or motor actuated. The system used in the present embodiment of the invention has been chosen by virtue of its special features of simple construction and control.

It is furthermore obvious that, even if in the preferred embodiment of the invention there is discribed and shown the possibility of modifying the slope of the awning by acting on the box position, as an alternative, it is possible to act on the position of the axles 7 holding supports 9 of arms 6, though this may result in a little more complicated solution. In this case one of the ends of axles 7 is made integral and pivotally connected, to a plate sliding with respect to the fixed frame 2 or to the support carriage 13, said plate being operated by the same, operating means as previously described or by equivalent devices. Such a solution is not described nor shown in detail as considered obvious for a person skilled in the art.

## Claims

1. Collapsible awning, in particular for pedlar's vehicles and similar ones, of the type comprising a flexible sheet material extendable over the area destined to the sale of articles from the vehicle in order to protect said articles and people, and a box (3) mounted on the vehicle roof, said box (3) embodying means for holding pivotable arms (6) for supporting said sheet material, said sheet material and said support arms being storable in said box, characterized in that said box (3) is pivotable with respect to a longitudinal axis of the vehicle, operating means (11) being provided for angularly displacing said box (3) around said axis so as to modify the awning inclination.

2. Collapsible awning according to claim 1, wherein said box (3) is pivotally connected to a frame (2) fixed on the vehicle roof and said operating means are fluid actuators (11) for displacing said box (3) from a substantially central rest position, where it is lying with one of its sides on the fixed frame (2) to an eccentric, operating position, where it is lying with a side adjacent to the previous one on the fixed frame (2), the axis of rotation coinciding with the corner common to said sides, said box (3) being further inclinable with respect to said operating position.

3. Collapsible awning according to claim 1, wherein said box (3) is pivotally connected to a frame (2) fixed on the vehicle roof and said operating means are fluid actuators (11) for angularly displacing said box (3) from an operating position where it is lying with one of its sides close to one of the longitudinal sides of the fixed frame (2) to a rest position, where it is outwardly rotated with respect to said frame (2), the axis of rotation being in correspondance to said longitudinal side of the frame (2).

4. Collapsible awning according to the previous claims, wherein said box (3) is mounted on a carriage (13) transversely sliding along said frame (2).

5. Collapsible awning according to the previous claims, wherein said means for holding said arms comprises a pair of support groups (5) placed at the ends of said box (3) and pivotally mounted around respective stationary, vertical axes, each of said support groups (5) holding a plurality of coplanar arms (6), each of said arms (6) being pivotally connected to one of said support groups (5).

6. Collapsible awning according to claim 5, wherein each support group (5) comprises an axle (7) pivotally connected to the box (3) carrying, close to its ends, support members (9) for a plurality of pivots (10) pivotally holding said arms (6).

7. Collapsible awning according to claim 6, wherein an upper and a lower support member (9) are fixed close to the upper and lower ends of said axles (7), the pivots (10) of the upper support member being aligned with those of the lower support member and respectively pivotally holding said arms (6) and stiffening struts (6a) for said arms (6).

8. Collapsible awning according to claim 1, wherein said support arms (6) are mounted for sliding within said box (3).

9. Collapsible awning according to claim 8, wherein a grooved beam (14) is provided within said box (3) to which said support groups (15) of said awning support arms (6) are slidably connected.

10. Collapsible awning according to claim 8, wherein said box embodies a grooved beam (14), said support groups being carriages (15) supporting pivots (17) to which said arms (6) are articulated.

**Patentansprüche**

1. Zusammenlegbare Plane, insbesondere für Markthändlerfahrzeuge und dgl. der Art, die ein biegbares Bahnmaterial, das über eine für den Verkauf von Gegenständen vom Fahrzeug bestimmte Fläche ausbreitbar ist, um diese Gegenstände und Menschen zu schützen, und einen auf dem Dach des Fahrzeugs montierten Kasten (3) umfaßt, welcher Kasten (3) Mittel zur Halterung schwenkbarer Arme (6) zum Stützen des Bahnmaterials enthält, wobei das Bahnmaterial und die Stützarme in diesem Kasten lagerbar sind, dadurch gekennzeichnet, daß der Kasten (3) in bezug auf eine Längsachse des Fahrzeugs schwenkbar ist, und daß Betätigungsmittel (11) vorgesehen sind, um den Kasten (3) um diese Achse im Winkel zu verstellen, um die Neigung der Plane zu verändern.

2. Zusammenlegbare Plane nach Anspruch 1, worin der Kasten (3) mit einem am Fahrzeugdach fixierten Rahmen (2) schwenkbar verbunden ist und die Betätigungsmittel Fluidbetätigungsmittel (11) sind zum Verstellen des Kastens (3) aus einer im wesentlichen zentralen Ruheposition, in welcher er mit einer seiner Seiten auf dem fixierten Rahmen (2) liegt, in eine exzentrische Betriebsposition, in welcher er mit einer Seite angrenzend zur vorherigen auf dem fixierten Rahmen (2) liegt, wobei die Rotationsachse mit der diesen Seiten gemeinsamen Ecke zusammenfällt, und wobei der Kasten (3) in bezug auf die Betriebsposition weiter neigbar ist.

3. Zusammenlegbare Plane nach Anspruch 1, worin der Kasten (3) mit einem am Fahrzeugdach fixierten Rahmen (2) schwenkbar verbunden ist und die Betätigungsmittel Fluidbetätigungsmittel (11) sind, um den Kasten (3) im Winkel von einer Betriebsposition, in der er mit einer seiner Seiten nahe einer der Längsseiten des fixierten Rahmens (2) liegt, in eine Ruheposition, in der er in bezug auf den Rahmen (2) nach außen gedreht ist, wobei die Rotationsachse mit der Längsseite des Rahmens (2) übereinstimmt, zu verstellen.

4. Zusammenlegbare Plane nach den vorhergehenden Ansprüchen, worin der Kasten (3) auf einem Wagen (13) montiert ist, der quer entlang dem Rahmen (2) gleitet.

5. Zusammenlegbare Plane nach den vorhergehenden Ansprüchen, worin das Mittel zur Halterung der Arme ein Paar Stützgruppen (5) an den Enden des Kastens (3) umfaßt, die um die entsprechenden ortsfesten, vertikalen Achsen schwenkbar montiert sind, wobei jede der Stützgruppen (5) eine Mehrzahl koplanarer Arme (6) hält und wobei jeder der Arme (6) mit einer der Stützgruppen (5) schwenkbar verbunden ist.

6. Zusammenlegbare Plane nach Anspruch 5, worin jede Stützgruppe (5) eine schwenkbar mit dem Kasten (3) verbundene Achse (7) umfaßt, die nahe ihren Enden Stützelemente (9) für eine Mehrzahl von Schwenkzapfen (10), welche die Arme (6) schwenkbar halten, trägt.

7. Zusammenlegbare Plane nach Anspruch 6, worin ein oberes und ein unteres Stützelement (9) nahe den oberen und unteren Enden der Achsen (7) fixiert sind, wobei der Schwenkzapfen (10) des oberen Stützelementes mit jenen des unteren Stützelementes fluchten und jeweils die Arme (6) und Versteifungsstreben (6a) für die Arme (6) schwenkbar halten.

8. Zusammenlegbare Plane nach Anspruch 1, worin die Stützarme (6) so montiert sind, daß sie innerhalb des Kastens (3) gleiten.

9. Zusammenlegbare Plane nach Anspruch 8, worin ein mit Nuten versehener Balken (14) innerhalb des Kastens (3) vorgesehen ist, mit dem die Stützgruppen (15) der Planenstützarme (6) gleitbar verbunden sind.

10. Zusammenlegbare Plane nach Anspruch 8, worin der Kasten einen mit Nuten versehenen Balken (17) aufweist, wobei die Stützgruppen Wagen (15) sind, die Schwenkzapfen (17) stützen, mit welchen die Arme (6) gelenkig verbunden sind.

**Revendications**

1. Store repliable, en particulier pour véhicules de vente ambulante et similaires, du type comprenant une feuille de matériau souple extensible au-dessus de la surface destinée à la vente d'articles du véhicule de manière à protéger lesdits articles et les personnes, et un caisson (3) monté sur le toit du véhicule, ledit caisson (3) contenant des moyens pour fixer des bras pivotables (6) destinés à supporter ladite feuille de matériau, ladite feuille de matériau et lesdits bras de support étant entreposables dans ledit caisson, caractérisé en ce que ledit caisson (3) est monté pivotant par rapport à une axe longitudinal du véhicule, des moyens de manoeuvre (11) étant prévus pour déplacer angulairement ledit caisson (3) autour dudit axe de manière à modifier l'inclinaison du store.

2. Store repliable selon la revendication 1, dans lequel ledit caisson (3) est relié de manière pivotante à un cadre (2) fixé sur le toit du véhicule et lesdits moyens de manoeuvre sont des vérins hydrauliques (11) destinés à déplacer ledit caisson (3) d'une position de repos sensiblement centrale, pour laquelle il repose sur le cadre fixe (2) en s'appuyant sur une de ses parois, à une position de fonctionnement excentrique, pour laquelle il repose sur le cadre fixe (2) en s'appuyant sur une paroi adjacente à la paroi précédente, l'axe de rotation coïncidant avec l'encoignure commune auxdites parois, ledit caisson (3) étant en outre inclinable par rapport à ladite position de fonctionnement.

3. Store repliable selon la revendication 1, dans lequel ledit caisson (3) est relié de manière pivotante à un cadre (2) fixé sur le toit du véhicule et lesdits moyens de manoeuvre sont des vérins hydrauliques (11) destinés à déplacer angulairement ledit caisson (3) d'une position de fonctionnement, pour laquelle il repose sur le cadre fixe (2) en s'appuyant sur une de ses parois proche d'une des parois longitudinales du cadre fixe (2), à une position de repos, pour laquelle il pivote vers l'extérieur par rapport audit cadre fixe (2), l'axe de rotation étant en correspondance avec ladite paroi longitudinale du cadre (2).

4. Store repliable selon les revendications précédentes, dans lequel ledit caisson (3) est monté sur un chariot (13) glissant transversalement sur ledit cadre (2).

5. Store repliable selon les revendications précédentes, dans lequel lesdits moyens pour fixer lesdits bras comprennent deux ensembles du support (5) placés aux extrémités dudit caisson (3) et montés pivotants autour d'axes verticaux fixes respectifs, chacun desdits ensembles de support (5) portant une pluralité de bras (6) coplanaires, chacun desdits bras (6) étant montés pivotants sur un desdits ensembles de support (5).

6. Store repliable selon la revendication 5, dans lequel chaque ensemble de support (5) comprend un axe (7) monté pivotant sur le caisson (3) portant, à proximité de ses extrémités, des éléments (9) de support pour une pluralité de pivots (10) portant lesdits bras (6).

7. Store repliable selon la revendication 6, dans lequel deux éléments de support (9), l'un supérieur et l'autre inférieur, sont fixés à proximité des extrémités supérieure et inférieure desdits axes (7), les pivots (10) de l'élément de support supérieur étant alignés avec ceux de l'élément de support inférieur et portant respectivement de manière pivotante lesdits bras (6) et des entretoises (6a) assurant la rigidité desdits bras (6).

8. Store repliable selon la revendication 1, dans lequel lesdits bras de support (6) sont montés de manière à glisser à l'intérieur dudit caisson (3).

9. Store repliable selon la revendication 8, dans lequel une poutrelle (14) à rainures est prévue à l'intérieur dudit caisson (3) à laquelle lesdits ensembles de support (15) desdits bras de support (6) du store sont reliés de manière coulissante.

10. Store repliable selon la revendication 8, dans lequel ledit caisson contient une poutrelle (14) à rainures, lesdits ensembles de support étant des chariots (15) portant des pivots (17) sur lesquels sont articulés lesdits bras (6).

Fig.1

Fig.2

Fig.3

Fig.4

Fig. 5

Fig. 6

Fig. 7